# EUROPÄISCHE PATENTSCHRIFT

(11) **EP 0 884 291 B1**
(45) Veröffentlichungstag und Bekanntmachung des Hinweises auf die Patenterteilung: **21.04.1999**
(21) Anmeldenummer: 98106209.4
(22) Anmeldetag: 04.04.1998
(51) Int. Cl.: C04B 28/06

(54) **Spachtelmasse, ihre Herstellung und Verwendung**
Filling composition, process for its production and use
Mastic, procédé de préparation et utilisation

(30) Priorität: 12.06.1997 DE 19724700
(43) Veröffentlichungstag der Anmeldung: 16.12.1998
(73) Patentinhaber: ARDEX GMBH, D-58453 Witten-Annen (DE)
(72) Erfinder: Goller, Herbert, Pittsburg, PA 15228 (US)
(74) Vertreter: COHAUSZ HANNIG DAWIDOWICZ & PARTNER

(56) Entgegenhaltungen:
- EP-A- 0 320 375
- EP-A- 0 417 418
- DE-A- 4 342 407
- US-A- 5 281 271
- DATABASE WPI Section Ch, Week 7421 Derwent Publications Ltd., London, GB; Class A93, AN 74-39502V XP002069107 & SU 391 097 A (GRIGOREV V L ET AL)

## Beschreibung

Die vorliegende Erfindung betrifft eine Spachtelmasse von hydraulischem Bindemittel, Zusatzstoffen und/oder weiteren organischen oder anorganischen Hilfsstoffen, ein Verfahren zur Herstellung einer derartigen Spachtelmasse sowie die Verwendung einer derartigen Spachtelmasse für Innenanwendungen insbesondere zur Herstellung spezielle ausgestalteter Bodenflächen.

Die DE-A 32 34 966 betrifft eine Spachtelmasse zur Beschichtung von Dämmplatten, welche neben Sand, Kalk und Zement als zweite Komponente zwingend eine Mischung einer wäßrigen Kunststoffdispersion und einem Hydrophobierungsmittel enthält, worunter vorzugsweise eine feststoffenthaltene Polyacrylat-Dispersion in Kombination mit einem Tensid, insbesondere einem nichtionischen Arminacetat verstanden wird . Diesem Stand der Technik liegt die Aufgabe zugrunde, eine speziell auf den Einsatz auf einer Dämmplatte geeignete Spachtelmasse bereitzustellen, die sowohl wasserdampfdurchlässig ist als auch eine gute Klebewirkung aufweist. Darüber hinaus soll diese Spachtelmasse auch nicht brennbar sein. Durch diese Druckschrift wird allerdings weder beschrieben noch nahegelegt, spezielle und zwei unterschiedliche Zementsorten mit sehr niedrigem Eisenoxidgehalt in Kombination mit einem zementechten Farbmittel einzusetzen, welches in einer möglichst hellen Farbe vorhanden sein sollte. Auch das erfindungsgemäße Herstell- und Weiterverarbeitungsverfahren wird dort mangels des ja nicht vorhandenen Farbmittels nicht nahegelegt.

Die DE-B 1 257 049 betrifft die Verwendung einer Zementmischung aus hydraulischem Zement, Wasser, Sand, Farbstoff und einem Polyacrylsäurederivat zur Herstellung oder Instandsetzung von gegossenen Zementanlagen, wie beispielsweise Böden, Wänden, Decken und Gehwegen. Als Komponente der Zementmischung werden in den Ausführungsbeispielen jeweils einzeln zwar Weißzement oder Portlandzement genannt, aber dort findet man keinen Hinweis darauf, auch beide Komponenten in Kombination in speziellen Gewichtsteilen, wie sie erfindungsgemäß beansprucht werden, einzusetzen. Darüber hinaus werden als Farbstoffe noch die Pigmente Eisenoxid, Hansagelb, Toluidinrot oder dergleichen eingesetzt. Aufgabe dieser deutschen Auslegeschrift ist die Bereitstellung einer Zementmischung und ihr Einsatz als Mörtel, Dichtungsmittel und so weiter, bei der eine hervorragende Wasserbeständigkeit und/oder Zugfestigkeit im Vordergrund steht. Hierdurch wird allerdings der Gegenstand der vorliegenden, bezüglich der qualitativen und quantitativen Zusammensetzung ausgewählten Spachtelmasse nicht nahegelegt, insbesondere auch nicht die Aufgabe, eine derartige Spachtelmasse mit einer möglichst hellen Farbe zu schaffen, die als Oberflächenbeschichtung flächig einsetzbar ist und durch Farbmittel einfärbbar ist. Auch das spezielle Verfahren, wie es erfindungsgemäß definiert ist, wird dort ebenso nicht nahegelegt wie die Verwendung dieser speziellen Spachtelmasse für die in den Verwendungsansprüchen definierten Zwecke.

Das bereits vor über 70 Jahren eingetragene US-Patent 1,506,193 betrifft eine wasserfeste Zusammensetzung für Wände, bestehend aus einem Gewichtsteil gebranntem Gips, also Calziumsulfat-Semihydrat, einem Gewichtsteil Holzfasern, zwei Gewichtsteilen Zement und einem halben Gewichtsteil Calziumhydroxid. Diesem US-Patent liegt die Aufgabe zugrunde, eine wasserfeste Zusammensetzung für Wände bereitzustellen, wodurch der hiervon umschlossene Platz absolut trocken unter allen Wetterbedingungen bleibt. Auch hierdurch wird der Gegenstand der vorliegenden Erfindung, eine Spachtelmasse zu schaffen, die möglichst hell ist, nicht nahegelegt, ebenso wie die entsprechenden Verfahrens- und Verwendungsansprüche, da die Zementkomponente im US-Patent weder auf Weißzement, also einen Portlandzement mit geringem Eisenoxidgehalt und auch einen Tonerdezement mit geringem Eisenoxidgehalt nicht ausdrücklich nennt und selbst heute noch bedeutende Lexika auf dem Gebiet der Chemie, wie der Römpp, 8. Aufl. 1968 Bd. 6 auf S. 4688 unter dem Stichwort "Zement" zwar den Portlandzement, aber nicht einen entsprechenden eisenoxidarmen Portlandzement und als Tonerdezement selbst nur ebensolche mit Eisenoxidgehalten von über 5 % Eisenoxid nennen.

Unter einer Spachtelmasse bzw. Ausgleichsmasse oder Spachtelkitt im Sinne der vorliegenden Erfindung, versteht man einen zähplastischen oder verlaufenden, oft gefüllten und/oder pigmentierten Beschichtungsstoff zum Ausgleichen von Unebenheiten des Untergrundes für Beschichtungen und Füllungen von Rissen, Löchern, Lunkern und sonstigen Beschädigungen des Untergrundes. Derartige Spachtelmassen werden üblicherweise verwendet für Innen- und Außenanwendungen und werden je nach Inhaltsstoff als Zementspachtel, Gipsspachtel, Leimspachtel, Cellulosespachtel, Emulsions- und Dispersionsspachtel, Ölspachtel, Öllackspachtel, Kunstharzspachtel, Lackspachtel oder Polyesterspachtel bezeichnet.

Als Bindemittel hierfür werden üblicherweise Alkydharze, Epoxid- und Polyesterharze, Polyurethan, Kunststoffdispersionen, trocknende Öle, Leim, Bitumen, Gips und Zement eingesetzt. Weiterhin enthalten die Spachtelmassen üblicherweise Füllstoffe, wie Kreide, Schiefermehl, Feinstsande und ggf. auch Pigmente. Aufgrund der vorgenannten Einsatzzwecke wird üblicherweise eine derartige Spachtelmasse hergestellt auf Basis von hydraulischen Bindemitteln, wie beispielsweise handelsüblichem Portlandzement, Hochofenzement, Tonerdezement, Kalk und/oder Gips zusammen mit Füllstoffen, wie Sand, Kreide oder Kalkgesteinsanden oder mehlen, die mit Wasser angemischt und anschließend verarbeitet werden. Das Abbindeverhalten sowie die rheologischen Eigenschaften solcher Massen werden mittels geeigneter anorganischer und/oder organischer Zusätze gesteuert, die physikalischen Eigenschaften der abgebundenen Massen durch geeignete Polymere, welche in Pulverform den üblichen Pulverkomponenten oder als wässerige Dispersion dem Anmachwasser zugegeben werden. Eine derartige Spachtelmasse gemäß Stand der Technik dient meist als Verlegeuntergrund für Bodenbeläge, wie beispielsweise Teppichböden, PVC und Polyolefinebeläge, Parkett oder keramische Fliesen.

In den seltensten Fällen wird eine derartige Spachtelmasse also direkt genutzt werden, so daß derartige Spachtelmassen üblicherweise durch den in den hydraulischen Bindemitteln reichlich vorhandenen Eisenoxidanteil eine meist dunkle Eigenfarbe mit einem Hellbezugswert Y von 30 und weniger besitzen.

Der vorliegenden Erfindung liegt nunmehr die Aufgabe zugrunde, eine derartige, vorwiegend als Untergrund eingesetzte Spachtelmasse in einer möglichst hellen Farbe zu schaffen, die nicht nur als Untergrund sondern auch als Oberflächenbeschichtung flächig einsetzbar ist und durch Farbmittel einfärbbar ist.

Diese Aufgabe wird durch eine speziell zusammengesetzte Spachtelmasse gemäß kennnzeichnenden Teil von Anspruch eins gelöst, wo als hydraulische Bindemittel spezielle, möglichst schwach gefärbte anorganische hydraulische Bindemittel eingesetzt werden.

Die vorliegende Erfindung betrifft somit eine Spachtelmasse auf Basis von hydraulischen Bindemitteln, Zusatzstoffen und/weiteren organischen und anorganischen Hilfsstoffen mit einem Hellbezugswert Y von wenigstens 50, die dadurch gekennzeichnet ist, daß sie 0,1 bis 6 Gewichtsprozent Weißzement, daß heißt eines speziellen Portlandzements mit einem Fe203 Gehalt von weniger als 5 Gewichtsprozent, vorzugsweise aber weniger als 2 Gew.-%, 0,1 bis 3 Gewichtsprozent Kalkhydrat, 5 bis 45 Gewichtsprozent Tonerdezement mit einem Eisengehalt, bezogen auf Fe2O3 von weniger als 5 Gewichtsprozent, 2 bis 18 Gewichtsprozent Calziumsulfat, 0,1 bis 2 Gewichtsprozent handelsübliche Verlaufsmittel und Steuerungsadditive, 0,1 bis 8 Gewichtsprozent organische Bindemittel und 35 bis 85 Gewichtsprozent Füllstoffe als Rest enthält.

Diese erfindungsgemäße Spachtelmasse weist gegenüber dem üblicherweise stärker eisenhaltigen als hydraulische Bindemittel eingesetzten Bindemitteln Portlandzement und Hochofenzement sowie Tonerdeschmelzzement durch den geringeren Eisengehalt eine helle Eigenfarbe auf, wodurch diese Spachtelmasse auch an der Oberfläche für beliebige Innenanwendungen eingesetzt werden kann.

Bei dem erfindungsgemäß eingesetzten Weißzement handelt es sich um einen Portlandzement mit einem Eisengehalt, bezogen auf Eisen-(lll)-oxid von weniger als 5 Gewichtsprozent, vorzugsweise aber weniger als 2 Gewichtsprozent, insbesondere weniger als 1 Gewichtsprozent, wie er beispielsweise in Deutschland von der Dyckerhoff-Zement GmbH in den Zementsorten Dyckerhoff Weiss SW mit einem Hellbezugswert Y von 83,6 (Fe2O3-gehalt: 0,26 Gew.-%) sowie in der Qualität Dyckerhoff Weiss DW mit einem Hellbezugswert Y von 84,9 (Fe₂O₃-gehalt: 0,2 Gew.-%) angeboten wird. Weitere Anbieter für diesen Weißzement ist die Firma Ahlborg in Dänemark. Im Gegensatz dazu weisen übliche Portlandzemente erhöhte Eisengehalte, bezogen auf Eisen-(lll)-oxid von bis zu 8 Gewichtsprozent auf, wobei sich Hellbezugswerte Y von nur etwa 30 einstellen. Die sogenannte Messung des Hellbezugswertes Y erfolgt üblicherweise nach der Norm CELAB 10° in der Ausgabe Januar 1981 in Verbindung mit der grundlegenden Norm DIN 5033, wo als Bezugspunkt mit einem Hellbezugswert von 97 % feinstgefälltes Bariumsulfat als Referenz eingesetzt wird.

Als weitere erfindungsgemäß eingesetzte Zementkomponente wird ein Tonerdezement mit einem geringen Eisengehalt, bezogen auf Fe2O3 von weniger als 5 Gew.-% verwandt. Der ebenfalls typische Hellbezugswert Y, der gut oberhalb der Hellbezugswerte von den eisenhaltigen Tonerdezementen von etwa 30 liegt, die im Bereich von oberhalb 50 und insbesondere von 65 bis 90 liegen. Derartige Tonerdezement-Qualitäten werden beispielsweise von der Firma Alcoa Rotterdam unter der Bezeichnung CA 14 sowie in Frankreich durch die Firma Lafarge unter den Bezeichnungen Secar 71 vertrieben.

Nach einer weiteren bevorzugten Ausführungsform weisen die erfindungsgemäßen Spachtelmassen einen Hellbezugswert Y, der nach vorgenanntem Verfahren bestimmt worden ist, von größer als 50, vorzugsweise aber 60 bis 90 auf, stellen also eine besonders helle Spachtelmassen-Qualität dar.

Bevorzugt kann die vorgenannte Spachtelmasse aus 0,5 bis 3,5 Gewichtsprozent Weißzement mit einem Fe2O3-gehalt von weniger als 2 Gew.-%, 0,5 bis 2 Gewichtsprozent Kalkhydrat, 7,5 bis 25 Gewichtsprozent Tonerdezement mit einem Eisengehalt (als Fe2O3) von weniger als 5 Prozent, 3 bis 15 Gewichtsprozent Calziumsulfat, in Form von Anhydrit, in Form von Halbhydrat von Dihydrat oder Gemischen der vorgenannten Calciumsulfat-Qualitäten, 0,2 bis 1,5 Gewichtsprozent handelsüblicher Verlaufshilfsstoffe oder Steuerungsadditive, wie beispielsweise Casein, Naphthalinsulfonat oder Melamin-Formaldehyd-Kondensat, 2 bis 6 Gewichtsprozent organische Bindemittel, wie beispielsweise Vinylacetat-Vinylversatat-, Vinylacetat-, Ethylen- oder Acrylatpolymerpulver oder -dispersionen und 40 bis 60 Gewichtsprozent Füllstoffe, beispielsweise Quarz, Karbonate, Schiefermehl, Feinsande u.s.w. enthalten.

Nach einer bevorzugten Ausführungsform enthält die erfindungsgemäße Spachtelmasse als Hilfsstoff 01, bis 8 Gewichtsprozent, vorzugsweise 0,5 bis 2 Gewichtsprozent, bezogen auf die gesamte Spachtelmasse, wenigstens eines zementechten Farbmittels. Unter Farbmittel im Sinne der vorliegenden Erfindung, wie sie auch in DIN 55943 vom November 1993 im einzelnen definiert ist, versteht man sowohl unlösliche Pigmente, die also im trockenen Zustand pulverförmig sind als auch lösliche Farbstoffe. Derartige Pigmente müssen in Bezug auf die Bindemittelkomponenten, d.h. insbesondere Kalk und Zement allerdings auch eine Echtheit und vorzugsweise eine Lichtechtheit aufweisen, wie sie in DIN 53237 vom Februar 1977 in Verbindung mit der entsprechenden Ergänzungsnorm DIN 53237 E im einzelnen definiert sind. Im Sinne dieser Norm gelten Pigmente dann als zementecht, wenn sie gegenüber Basen und auch gegenüber Schwefelverbindungen widerstandsfähig sind. Dies sind beispielsweise die zementechten Pigmente Eisenoxidschwarz, Manganschwarz, Eisenoxidrot, -Braun und -Gelb; Umbra, Ocker, Terra di Siena, Neapelgelb; Chromoxidgrün, Chromoxidhydratgrün; Titanweiß R, Anatas, Ultramarinblau und Manganblau.

Nach einer weiteren bevorzugten Ausführungsform enthält diese als Hilfsstoff 0,1 bis 8 Gewichtsprozent, vorzugsweise 0,5 bis 2 Gewichtsprozent, bezogen auf die gesamte Spachtelmasse, wenigstens eines lichtreflektierenden, leuchtenden oder nachleuchtenden zementechten Farbmittels. Unter lichtreflektierenden Farbmitteln im Sinne der vorliegenden Erfindung versteht man beispielsweise pulverisierte Metalle oder Metallegierungen, Goldbronze, Aluminiumpulver oder Silberbronze, unter leuchtenden Farbmitteln im Sinne der vorliegenden Erfindung versteht man entweder organische fluoreszierende Pigmente, die sogenannten Phosphore wie auch durch geringe Mengen radioaktiver Elemente selbstleuchtende anorganische Farbstoffe.

Nach einer weiteren bevorzugten Ausführungsform enthält die Spachtelmasse als Hilfsstoff 0,1 bis 8 Gewichtsprozent, vorzugsweise 0,5 bis 2 Gewichtsprozent, bezogen auf die gesamte Spachtelmasse wenigstens eines Farbmittels in Form eines zementechten metallenthaltenden Pulvers, eines Glanzpigments oder Leuchtpigments. Hierunter versteht man solche Pigmente, bei denen durch gerichtete Reflexion an überwiegend flächig ausgebildeten und ausgerichteten metallischen oder stark lichtbrechenden Pigmentteilchen Glanzeffekte entstehen, wie beispielsweise bei den sogenannten Aluminium und Silberbronzen oder den aus der Kosmetik bekannten Perlglanzpigmenten.

Eine weitere bevorzugte Ausführungsform enthält als Hilfsstoff 0,1 bis 8 Gewichtsprozent, vorzugsweise 0,5 bis 2 Gewichtsprozent, bezogen auf die gesamte Spachtelmasse, wenigstens eines aufhellenden zementechten Farbmittels. Unter einem derartigen Leuchtpigment versteht man beispielsweise die üblichen phosphoreszierenden Zinkcadmiumsulfide.

Nach einer weiteren bevorzugten Ausführungsform enthält die erfindungsgemäße Spachtelmasse als Hilfsstoff 0,1 bis 5 Gewichtsprozent, vorzugsweise 0,5 bis 2 Gewichtsprozent, bezogen auf die gesamte Spachtelmasse organische und anorganische ggf. angefärbte verrottungsstabile Chips oder Faserstoffe. Bei den vorgenannten Chips handelt es sich beispielsweise um Glimmerchips, Biotit oder Muscovit. Alternativ können verrottungsstabile Faserstoffe eingesetzt werden, wie sie vorzugsweise auf Basis organischer Fasern auf Cellulosebasis bekannt sind. Diese Fasern weisen beispielsweise typische Faserlängen von 0,2 bis 5 Millimeter auf. Unter organischen Fasern auf Cellulosebasis im Sinne der vorliegenden Erfindung versteht man sowohl Fasern aus natürlicher oder regenerierter Cellulose und aus Celluloseacetat, wie beispielsweise Baumwolle, Leinen, Zellwolle, Kunstseide sowie Kupro, Viskose und Acetat einschließlich Polynosic- und andere Modalfasem, die auch unter der Bezeichnung Reyon bekannt sind.

Der vorliegenden Erfindung liegt weiterhin die Aufgabe zugrunde, ein Verfahren zur Herstellung der vorgenannten Spachtelmasse bereitzustellen. Gegenstand der vorliegenden Erfindung ist daher auch ein Verfahren zur Herstellung der vorgenannten farbmittelenthaltenden Spachtelmasse, wobei man zunächst in an sich bekannter Weise die hydraulischen Bindemittel, Zusatzstoffe und/oder Hilfsstoffe für eine ausreichende Dauer miteinander kontaktiert und diese Vormischung daraufhin wenigstens ein Farbmittel und ggf. eine Faser und/oder Chips in einer Menge von 0,1 bis 5 Gewichtsprozent, vorzugsweise 0,5 bis 2 Gewichtsprozent, bezogen auf die gesamte Spachtelmasse, zusetzt, wobei dieser Zusatz die Vormischung wenigstens zum Teil einfärbt.

Nach einer weiteren Ausführungsform betrifft die vorliegende Erfindung ein Verfahren zur Verarbeitung einer durch eine Spachtelmasse erzeugten Spachtelfläche, wobei in die durch die Spachtelmasse der vorgenannten Art erzeugte Spachtelfläche vor Aushärtung wenigstens zum Teil lösbare, vorzugsweise wasserlösliche Salzkristalle, vorzugsweise Natriumchlorid, eingebracht werden, die nach der Aushärtung der Spachtelmasse durch Wasser herausgelöst werden und so eine entsprechende Oberflächengestaltung bewirken.

Nach einer weiteren bevorzugten Ausführungsform betrifft die vorliegende Erfindung ein Verfahren zur Weiterverarbeitung der vorgenannten erfindungsgemäßen Spachtelmasse, das dadurch gekennzeichnet ist, daß die Spachtelmasse nach der Anmischung mit Wasser durch darin gelöste oder dispergierte Farbmittel wenigstens zum Teil eingefärbt wird.

Eine weitere bevorzugte Ausführungsform der vorliegenden Erfindung betrifft die Verwendung der vorgenannten Spachtelmasse oder der nach den vorgenannten Verfahren erhältlichen Spachtelmasse für Innenanwendungen.

Nach einer bevorzugten Ausführungsform einer derartigen Verwendung dient diese Spachtelmasse zur Herstellung von Ausgleich-, Füll- oder Nivelliermassen.

Nach einer weiteren bevorzugten Ausführungsform wird die vorgenannte Spachtelmasse zur Herstellung von Bodenflächen mit Bemusterungen, Farbschattierungen, Farbschlieren, optischen Effekten und/oder Leuchteffekten eingesetzt.

Nach einer weiteren bevorzugten Ausführungsform wird die erfindungsgemäße Spachtelmasse zur Herstellung oder Nachbearbeitung von Bodenflächen zur Markierung von Fluchtwegen mittels Leuchtfarben eingesetzt.

Nach einer weiteren bevorzugten Ausführungsform wird die erfindungsgemäße Spachtelmasse zur Nachbearbeitung von Bodenflächen oder -fugen durch mechanische oder physikalisch/chemische Bearbeitung der Oberflächen wenigstens eines Teils dieser Fläche oder Fugen und Nachnivellierung mittels der farbmittelenthaltenden und ggf. faser- und/oder chipshaltigen Spachtelmasse.

Nach einer weiteren bevorzugten Ausführungsform werden die erfindungsgemäßen Spachtelmassen zur Schaffung einer farblich gestalteten Bodenfläche eingesetzt, indem in die frische Spachtelmasse eingefärbte Sande, Chips oder Fasern eingestreut werden.

Die vorliegende Erfindung wird nunmehr durch ein Ausführungsbeispiel näher erläutert.

Hierbei wurde aus einem Gewichtsprozent eines Weißzements (Dyckerhoff Weiss SW, Dyckerhoff Zement GmbH) 0,5 Gewichtsprozent Kalkhydrat, 20 Gewichtsprozent eines Tonerdezements mit einem Eisengehalt (als Fe₂O₃) von weniger als 5 Prozent (Secar 71, Lafarge, Frankreich) 9 Gewichtsprozent Calciumsulfat. Semihydrat, 0,5 Prozent eines Verlaufshilfsmittels, 5 Gewichtsprozent eines organischen Bindemittels sowie 68 Gewichtsprozent Calciumcarbonat durch Vermischen mit 18 Gewichtsteilen Wasser, bezogen auf 100 Gewichtsteile der Spachtelmasse hergestellt.

Die so hergestellte Spachtelmasse ergab eine Verlaufszeit von 15 Minuten.

Die Erstarrungszeit nach EN196T3 wurde mit Hilfe des Vicatschen Nadelgeräts in Viacat ermittelt und betrug als erste Vicat-Zeit 30 Minuten und als zweite Vicat-Zeit 50 Minuten.

Die Rohdichte der so erhaltenen Spachtelmasse betrug 2,1 kg pro Liter.

Die nach EN196T1 bestimmten Festigkeiten zeigten nach 24 Stunden eine Druckfestigkeit von 20 N/mm² sowie eine Biegezugfestigkeit von 7 N/mm² sowie nach 28 Tagen eine Druckfestigkeit von 45 N/mm² und nach 28 Tagen eine Biegezugfestigkeit von 15 N/mm².

Die vorgenannte erfindungsgemäße Spachtelmasse kann beispielsweise mit geeigneten, zementechten pulverförmigen Pigmenten, ein- oder mehrfarbigen Chips sowie fluoreszierenden Pigmenten homogenisiert werden, um ein Produkt mit gleichmäßiger Färbung zu erhalten. Bestimmte optische Effekte eines solchen Chips können aber auch eingestellt werden, wenn vor Ort die o.g. Farbmittel, Chips oder fluoreszierenden Zusätze in oder auf die mit Wasser angemischte Spachtelmasse gegeben werden, um so Farbschattierungen, -schlieren oder andere Muster und optische Effekte in der Spachtelmasse zu gestalten.

Eine weitere optisch ansprechende erfindungsgemäße Gestaltungsmöglichkeit eines Bodens ist gegeben, indem ein ausgehärtete weiße oder eingefärbte Spachtelmasse einem vorgegebenen Muster entsprechend eingefräst werden und die dadurch entstandenen Vertiefungen anschließend mit einer anders eingefärbten, ebenfalls erfindungsgemäßen Spachtelmasse nachnivelliert werden. So lassen sich u.a. Designs von Naturstein- oder Fliesenbodenflächen schaffen. Auch gestattet das erfindungsgemäße Verfahren die Schaffung von Flächen, die Intarsien aus verschiedenen Materialien imitieren. Nach dem erfindungsgemäßen Verfahren lassen sich schließlich auch in den Böden Fluchtwege markieren, indem die Markierungsflächen ausgefräst und anschließend mit fluoreszenzpigmenthaltigen Spachtelmassen gefüllt und nachnivelliert werden.

## Patentansprüche

1. Spachtelmasse auf Basis von hydraulischem Bindemittel, Zusatzstoffen und / oder weiteren organischen oder anorganischen Hilfsstoffen mit einem Hellbezugswert Y von wenigstens 50, **dadurch gekennzeichnet, daß** sie
0,1 bis 6 Gew.-% Weißzement (Portlandzement mit einem Fe₂O₃ Gehalt von weniger als %, vorzugsweise weniger als 2 Gew.-%)
0,1 bis 3 Gew.-% Kalkhydrat
5 bis 45 Gew.-% Tonerdezement mit einem Eisengehalt (als Fe₂O₃) von weniger als 5 %
2 bis 18 Gew.-% Calciumsulfat
0,1 bis 2 Gew.-% handelsübliche Verlaufshilfsmittel/Schlichtungsadditive
0,1 bis 8 Gew.-% organische Bindemittel
35 - 85 Gew.-% Füllstoffe
sowie als Hilfsstoff 0,1 bis 8 Gew.-%, vorzugsweise 0,5 bis 2 Gew.-%, bezogen auf die gesamte Spachtelmasse, wenigstens eines zementechten Farbmittels enthält.

2. Spachtelmasse nach Anspruch 1 **dadurch gekennzeichnet, daß** sie einen Hellbezugswert Y von 65 bis 90 aufweist.

3. Spachtelmasse nach Anspruch 1 oder 2, **dadurch gekennzeichnet,** daß diese als Hilfsstoff 0,1 bis 8 Gew.-%, vorzugsweise 0,5 bis 2 Gew.-%, bezogen auf die gesamte Spachtelmasse, wenigstens eines lichtreflektierenden, leuchtenden oder nachleuchtenden zementechten Farbmittels, enthält.

4. Spachtelmasse nach vorstehenden Ansprüchen, **dadurch gekennzeichnet, daß** diese als Hilfsstoff 0,1 bis 8 Gew.-%, vorzugsweise 0,5 bis 2 Gew.-%, bezogen auf die gesamte Spachtelmasse, wenigstens eines Farbmittels in Form eines zementechten metallenthaltenden Pulvers, eines Glanzpigments oder Leuchtpigments enthält.

5. Spachtelmasse nach vorstehenden Ansprüchen, **dadurch gekennzeichnet, daß** diese als Hilfsstoff 0,1 bis 8 Gew.-%, bezogen auf die gesamte Spachtelmasse, wenigstens eines aufhellenden zementaktiven Farbmittels enthält.

6. Spachtelmasse nach vorstehenden Ansprüchen, **dadurch gekennzeichnet, daß** diese als weiteren Hilfsstoff 0,1 bis 5 Gew.-%, vorzugsweise 0,5 bis 2 Gew.-% bezogen auf die gesamte Spachtelmasse, organische oder anorganische ggf. angefärbte verrottungsstabile Chips und/oder Faserstoffe, vorzugsweise auf Basis organischer Fasem auf Cellulosebasis, mit einer Faserlänge von 0,2 bis 5 mm enthalten.

7. Verfahren zur Herstellung der Spachtelmasse nach Ansprüchen 2 bis 6, **dadurch gekennzeichnet, daß** man zunächst in an sich bekannter Weise die hydraulischen Bindemittel, Zusatzstoffe und / oder Hilfsstoffe für eine ausreichende Dauer miteinander kontaktiert und dieser Vormischung daraufhin wenigstens ein Farbmittel und ggf. eine Faser in einer Menge von bis Gew.-%, bezogen auf die gesamte Spachtelmasse, zusetzt, wobei dieser Zusatz die Vormischung wenigstens zu Teil einfärbt.

8. Verfahren zur Weiterverarbeitung der Spachtelmasse nach Anspruch 1 bis 6, **dadurch gekennzeichnet, daß** die Spachtelmasse nach der Anmischung mit Wasser durch darin gelöste oder dispergierte Farbmittel wenigstens zu einem Teil angefärbt wird.

9. Verfahren zur Verarbeitung einer durch eine Spachtelmasse erzeugte Spachtelfläche, **dadurch gekennzeichnet, daß** in die durch die Spachtelmasse nach Ansprüchen 1 bis 6 erzeugte Spachtelfläche vor Aushärtung wenigsten zum Teil lösbare, vorzugsweise wasserlösliche Salzkristalle, vorzugsweise Natriumchlorid, eingebracht werden, die nach Aushärtung der Spachtelmasse durch Wasser herausgelöst werden und so eine entsprechende Oberflächengestaltung bewirken.

10. Verwendung der Spachtelmasse nach Ansprüchen 1 bis 6, oder erhältlich nach Ansprüchen 7 bis 9 für Innenanwendungen ggf. in Kombination mit handelsüblichen Ausgleichsmassen.

11. Verwendung der Spachtelmasse nach Ansprüchen 1 bis 6 oder erhältlich nach Ansprüchen 7 bis 9 zur Herstellung von Ausgleichs-, Füll- oder Nivelliermassen.

12. Verwendung der Spachtelmasse nach Ansprüchen 1 bis 6, oder erhältlich nach Ansprüchen 7 bis 9 zur Herstellung von Bodenflächen mit Bemusterungen, Farbschattierungen, Farbschlieren, optischen Effekten und / oder Leuchteffekten.

13. Verwendung der Spachtelmasse nach Ansprüchen 1 bis 6, oder erhältlich nach Ansprüchen 7 bis 9 zur Herstellung oder Nachbearbeitung von Bodenflächen zur Markierung von Fluchtwegen mittels Leuchtfarben.

14. Verwendung der Spachtelmasse nach Ansprüchen 1 bis 6 oder erhältlich nach Anspruch 7 bis 9 zur Nachbearbeitung von Bodenflächen oder -fugen durch mechanische oder physikalisch/chemische Bearbeitung der Oberfläche wenigstens eines Teil dieser Flächen oder Fugen und Nachnivellierung mittels der farbmittelenthaltenden und ggf. faserhaltigen Spachtelmasse.

15. Verwendung der Spachtelmasse nach Ansprüchen 1 bis 6 oder erhältlich nach Ansprüchen 7 - 9 zur Schaffung einer farblich gestalteten Bodenfläche, indem in die frische Spachtelmasse eingefärbte Sande, Chips oder Fasern eingestreut werden.

## Claims

1. Levelling compound based on hydraulic binders, additives and / or further organic or inorganic materials with a lightness value Y of at least 50, **characterized in that** it comprises
0.1 to 6 wt.-% of white cement (Portland cement with a content of Fe₂O₃ of less than 5 %, preferably less than 2 wt.-%)
0.1 to 3 wt.-% of hydrated lime
5 to 45 wt.-% of aluminous cement with a content of iron (as Fe₂O₃) of less than 5 %
2 to 18 wt.-% of calcium sulfate
0.1 to 2 wt.-% of commercial rheological
0.1 to 8 wt.-% of hydraulic organic binders
35 - 85 wt.-% of fillers
and as additive a colorant, resisting to ciment, corresponding to 0.1 to 8, preferably 0.5 to 2 wt.-%, in relation to the total weight of the levelling compound.

2. Levelling compound in accordance to claim 1, **characterized in that** it has a lightness value Y of 65 to 90.

3. Levelling compound in accordance to claims 1 and 2, **characterized in that** it comprises as additive at least one colorant, resisting to cement, reflecting light, luminous or phosphorogen, corresponding to 0.1 to 8 wt.-%, preferably 0.5 to 3 wt.-%, in relation to the total weight of the levelling compound,.

4. Levelling compound in accordance to the preceding claims, **characterized in that** it comprises as additive at least one colorant, in powder form, resisting to cement, containing metal, or in form of a shiny or a luminescent pigment, corresponding to 0.1 to 8 wt.-%, preferably 0.5 to 2 wt.-%, in relation to the total weight of the levelling compound.

5. Levelling compound in accordance to the preceding claims, **characterized in that** it comprises as additive at least one brightening colorant, cement active, corresponding to 0.1 to 8 wt.-%, in relation to the total weight of the levelling compound.

6. Levelling compound in accordance to the preceding claims, **characterized in that** it comprises as further additive organic or inorganic chips, eventually dyed, resisting to rotting, and / or fibre materials, preferably based on organic fibre on cellulose basis, with a fibre length of 0.2 to 5 mm. said additive corresponding to 0.1 to 5 wt.-%, preferably 0.5 to 2 wt.-%, in relation to the total weight of the levelling compound.

7. Process of manufacturing a levelling compound in accordance to the claims 2 to 6, **characterized in that** one puts in contact with each other in a *per se* known manner the hydraulic binders, the additives or / and charges for a sufficient length of time, thereafter one adds to this premixing at least one colorant and eventually a fibre in the quantity 0.1 to 5 wt.-%, in relation to the total weight of the levelling compound, said material is colouring at least a portion of the said premixing.

8. Procedure for using the levelling compound in accordance to the claims 1 to 6, **characterized in that** the levelling compound after being mixed with water is partly coloured by the colorant, which is dissolved or in dispersion.

9. Procedure for creating a levelled surface with a levelling compound, **characterized in that prior** to the hardening process salt crystals at least partly soluble, preferably soluble in water, preferably sodium chloride, have been introduced into the levelling layer made by using the levelling compound in accordance to claims 1 to 6, said cristalls after hardening of the levelling compound, are dissolved by water and thus an appropriate surface is obtained.

10. Use of the levelling compound in accordance to claims 1 to 6, or obtainable in accordance to claims 7 to 9, for application indoors, eventually combined with other commercial levelling compounds.

11. Use of the levelling compound in accordance to claims 1 to 6, or obtainable in accordance to claims 7 to 9, for manufacturing other levelling and filling compounds.

12. Use of the levelling compound in accordance to claims 1 to 6, or obtainable in accordance to claims 7 to 9, to create floor surfaces with patterns, colour shading, colour streaming, optical effects and / or luminous effects.

13. Use of the levelling compound in accordance to claims 1 to 6, or obtainable in accordance to claims 7 to 9, to create or finish floor surfaces in order to mark flight paths by using luminous colours.

14. Use of the levelling compound in accordance to claims 1 to 6, or obtainable in accordance to claims 7 to 9, to finish floor surfaces or joints by treating the surface mechanically or physically / chemically, or at least one part of these surfaces or joints, and to level afterwards with the compound comprising colour materials or eventually fibres.

15. Use of the levelling compound in accordance to claims 1 to 6, or obtainable in accordance to claims 7 to 9, to create a coloured floor surface by spreading coloured sand, chips or fibres into the fresh levelling compound.

## Revendications

1. Enduit de ragréage à base de liants hydrauliques, additifs et / ou charges organiques ou inorganiques avec une valeur relative de luminosité Y d'au moins 50, **caractérisé en qu'**il comprend
0,1 à 6 % en poids de ciment blanc (ciment de Portland avec un contenu en Fe203 de moins de 5 %, de préférence de moins de 2 % en poids)
0,1 à 3 % en poids d'hydrate de chaux
5 à 45 % en poids de ciment fondu avec un contenu en fer (Fe₂O₃) de moins de 5 %
2 à 18 % en poids de sulfate de calcium
0,1 à 2 % en poids de produits adjuvants rhéologiques
0,1 à 8 % en poids de produits liants organiques
35 - 85 % en poids de matières de filler
ainsi que comme additif un produit colorant, résistant au ciment, correspondant à 0,1 à 8% en poids, de préférence 0,5 à 2 % en poids, par rapport au poids total de l'enduit de ragréage.

2. Enduit de ragréage, conformément à la revendication 1, **caractérisé en qu'**il présente une valeur relative de luminosité Y de 65 à 90.

3. Enduit de ragréage, conformément aux revendications 1 et 2, **caractérisé en qu'**il comprend comme additif au moins un produit colorant, résistant au ciment, réfléchissant la lumière, lumineux ou phosphorogène, correspondant à 0,1 à 8 % en poids, de préférence 0,5 à 3 % en poids, par rapport au poids total de l'enduit de ragréage,.

4. Enduit de ragréage, conformément aux revendications précédentes, **caractérisé en qu'**il comprend comme additif au moins un produit colorant, sous forme de poudre résistant au ciment, contenant du métal, de pigment luisant ou luminescent, correspondant à 0,1 à 8 % en poids, de préférence 0,5 à 2 % en poids, par rapport au poids total de l'enduit de ragréage.

5. Enduit de ragréage, conformément aux revendications précédentes, **caractérisé en qu'**il comprend comme additif au moins un produit colorant d'éclaircissage, de ciment, correspondant à 0,1 à 8 % en poids, par rapport au poids total de l'enduit de ragréage.

6. Enduit de ragréage, conformément aux revendications précédentes, **caractérisé en qu'**il comprend comme additif supplémentaire des plaquettes organiques ou inorganiques, au cas échéant teintées, résistant au pourrissement, et / ou des matières fibreuses, de préférence à base de fibres organiques à base de cellulose, dont la longueur est de 0,2 à 5 mm, un tel additif correspond à 0,1 à 5% en poids, de préférence 0,5 à 2 % en poids, par rapport au poids total de l'enduit de ragréage.

7. Procédé de production de l'enduit de ragréage, conformément aux revendications 2 à 6, **caractérisé en qu'**on met d'abord en contact, comme c'en est l'usage, les liants hydrauliques, les additifs et / ou charges, pour une durée de temps suffisante, qu'ensuite on ajoute à ce prémélange au moins un produit colorant, et au cas échéant une fibre, dans la quantité de 0,1 à 5 % en poids, par rapport au poids total de l'enduit de ragréage, cet ajout au prémélange doit au moins en teinter une partie.

8. Procédé pour l'utilisation de l'enduit de ragréage, conformément aux revendications 1 à 6, **caractérisé en que** l'enduit de ragréage, après le mélange avec l'eau, est au moins teinté en partie par le produit colorant dissous ou en dispersion dans ce mélange.

9. Procédé pour réaliser une surface ragréée avec un enduit de ragréage, **caractérisé en-qu'**avant son durcissement des cristaux de sel au moins solubles en partie, de préférence solubles dans l'eau, de préférence du chlorure de sodium, ont été introduits dans la couche de ragréage, réalisée en appliquant l'enduit de ragréage conformément aux revendications 1 à 6 dont après durcissement de l'enduit de ragréage, ces cristaux sont éliminés par dissolution avec de l'eau, et une surface adéquate est obtenue.

10. Utilisation de l'enduit de ragréage, conformément aux revendications 1 à 6, ou que l'on peut obtenir conformément aux revendications 7 à 9 pour domaines d'application à l'intérieur, au cas échéant en le combinant avec des enduits d'égalisation commerciaux.

11. Utilisation de l'enduit de ragréage, conformément aux revendications 1 à 6, ou que l'on peut obtenir conformément aux revendications 7 à 9, pour la fabrication d'enduits d'égalisation, de remplissage ou de nivellement.

12. Utilisation de l'enduit de ragréage, conformément aux revendications 1 à 6, ou que l'on peut obtenir conformément aux revendications 7 à 9, pour la réalisation de surfaces au sol avec des dessins, nuances de couleur, stries de couleur, effets optiques et /ou effets lumineux.

13. Utilisation de l'enduit de ragréage, conformément aux revendications 1 à 6, ou que l'on peut obtenir conformément aux revendications 7 à 9, pour la réalisation ou réfection de surfaces au sol afin de marquer des passages de sauvetage en employant des couleurs lumineuses.

14. Utilisation de l'enduit de ragréage, conformément aux revendications 1 à 6, ou que l'on peut obtenir conformément aux revendications 7 à 9, pour la réfection de surfaces au sol ou de joints, en traitant la surface mécaniquement ou physiquement / chimiquement, du moins une partie de ces surfaces ou joints, et en nivellant ensuite avec l'enduit de ragréage comprenant des matières colorantes ou au cas échéant des fibres.

15. Utilisation de l'enduit de ragréage conformément aux revendications 1 à 6, ou que l'on peut obtenir conformément aux revendications 7 à 9, pour réaliser une surface au sol en couleur, en répandant dans l'enduit de ragréage frais du sable, des plaquettes ou fibres teintés.
